# FASCICULE DE BREVET EUROPEEN

(11) **EP 1 035 775 B1**
(45) Date de publication et mention de la délivrance du brevet: **27.11.2002**
(21) Numéro de dépôt: 98958299.4
(22) Date de dépôt: 02.12.1998
(51) Int. Cl.: A01N 43/76

(54) **COMPOSITION FONGICIDE ET/OU BACTERICIDE SYNERGIQUE**
SYNERGISTISCHE FUNGIZIDE UND/ODER BAKTERIZIDE ZUSAMMENSETZUNGEN
SYNERGETIC FUNGICIDE AND/OR BACTERICIDE COMPOSITION

(30) Priorité: 04.12.1997 FR 9715585
(43) Date de publication de la demande: 20.09.2000
(73) Titulaire: AVENTIS CROPSCIENCE S.A., 69009 Lyon (FR)
(72) Inventeur: GIVOIS, Bernadette, F-69006 Lyon (FR); LATORSE, Marie-Pascale, F-69210 Sourcieux les Mines (FR)
(86) Numéro de dépôt international: FR9802590
(87) Numéro de publication internationale: WO99029175

(56) Documents cités:
- EP-A- 0 393 911
- "MIXTURES OF FUNGICIDES, INSECTICIDES AND HERBICIDES" RESEARCH DISCLOSURE, no. 388, août 1996, page 489/490 XP000635427

## Description

La présente invention a pour objet une composition fongicide et/ou bactéricide synergique comprenant la famoxadone et un dérivé de l'acide phosphoreux et un procédé mettant en oeuvre ladite composition et destiné à protéger, à titre curatif ou préventif, les cultures contre les attaques fongiques.

Il est toujours désirable d'améliorer le spectre d'activité et l'efficacité de tels composés à action fongicide, ou de les renforcer en les associant à d'autres molécules afin d'obtenir un produit plus performant (association avec un fongicide systémique, ces fongicides étant plutôt des molécules de type "contact") ou encore de prévenir l'apparition de souches fongiques résistantes à ces nouveaux fongicides.

La divulguation de recherche "Research disclosure", No. 388, août 1996, pages 488-490, décrit un composé ayant la structure chimique du famoxadone pouvant être utilisé avec d'autres fongicides tel que le fosetyl-aluminium.

Cependant, il est très souhaitable de disposer de produits fongicides bénéficiant d'une persistance d'action améliorée, de nature à espacer dans le temps le nombre de traitements phytosanitaires nécessaires au bon contrôle des parasites.

Il est également particulièrement avantageux de pouvoir diminuer la quantité de produits chimiques épandus dans l'environnement. tout en assurant une protection performante des cultures contre les attaques fongiques.

Il a maintenant été trouvé qu'un (ou plusieurs) des objectifs précédents pouvait être atteint grâce à la composition fongicide et/ou bactéricide selon la présente invention.

La présente invention a donc pour objet en premier lieu une composition fongicide et/ou bactéricide synergique comprenant comme composé A la famoxadone, encore appelé JE874, et au moins un composé fongicide B choisi dans le groupe comprenant les dérivés de l'acide phosphoreux comme les phosphites métalliques tel que le fosétyl-Al, et l'acide phosphoreux lui-même et ses sels alcalins ou alcalino-terreux.

La composition fongicide et/ou bactéricide selon l'invention comprend avantageusement les composants A et B dans un rapport en poids A/B compris entre 1/240 et 1/1, de préférence entre 1/60 et 1/7, et de façon encore plus avantageuse dans un rapport compris entre 1/36 et 1/12.

Il est bien entendu que ladite composition fongicide et/ou bactéricide peut renfermer un seul composé B ou plus d'un tel composé, par exemple 1, 2 ou 3 composés B selon l'utilisation à laquelle elle est destinée.

Parmi les significations plus spécialement préférées du composé B définies ci-dessus, on préfère encore le fosétyl Al. De manière parfaitement inattendue, la composition selon l'invention améliore alors de façon notable l'action des matières actives prises séparément pour un nombre de champignons particulièrement nuisibles pour les cultures, comme en particulier la vigne ou les solanées. Cette amélioration se traduit notamment par une diminution des doses de chacun des constituants, ce qui est particulièrement avantageux pour l'utilisateur et l'environnement. Le produit (mélange) fongicide et/ou bactéricide présente ainsi des propriétés synergiques attestées par l'application de la méthode de Tammes, "Isoboles, a graphic représentation of synergism in pesticides" Netherlands Journal of Plant Pathology, 70(1964), p. 73-80.

De manière préférée, lorsque le composant B est le fosétyl-Al, le rapport A/B est compris entre 1/60 et 1/7, et de façon encore plus avantageuse ce rapport est compris entre 1/36 et 1/12 pour l'ensemble des cultures envisagées.

Les structures correspondant aux noms communs des matières actives B sont indiquées dans l'un au moins des 2 ouvrages suivants:
- "The pesticide manual" édité par Clive TOMLIN et publié par le British Crop Protection Council, 10ème édition (page 530);
- l'Index phytosanitaire 1994, édité par l'Association de Coordination Technique Agricole, 30ème édition.

Le composé A (famoxadone) est quand à lui un composé nouveau de type oxazolidine-dione connu par la demande de brevet européen publiée sous le numéro EP 0393911. Il s'agit du 5-methyl-5-(4-phenoxyphenyl)-3-(phenylamino-2,4-oxazolidinedione).

La composition fongicide et/ou bactéricide selon l'invention comprend. comme matière active, un composé A et au moins un composé B en mélange avec les supports solides ou liquides, acceptables en agriculture et/ou les agents tensio-actifs également acceptables en agriculture. En particulier sont utilisables les supports inertes et usuels et les agents tensio-actifs usuels. Ces compositions recouvrent non seulement les compositions prêtes à être appliquées sur la culture à traiter au moyen d'un dispositif adapté, tel qu'un dispositif de pulvérisation, mais également les compositions concentrées commerciales qui doivent être diluées avant application sur la culture. On désigne par matière active la combinaison d'au moins un composé A avec au moins un composé B.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, etc... Plus généralement les composés A et B peuvent être combinés à tous les additifs solides ou liquides correspondant aux techniques habituelles de la mise en formulation.

D'une façon générale, les compositions selon l'invention contiennent habituellement de 0,05 à 95 % (en poids) de matière active, un ou plusieurs supports solides ou liquides et, éventuellement, un ou plusieurs agents tensioactifs.

Par le terme "support", dans le présent exposé, on désigne une matière organique ou minérale, naturelle ou synthétique, avec laquelle la matière active est combinée pour faciliter son application sur les parties aériennes de la plante. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau, alcools, notamment le butanol etc...).

L'agent tensioactif peut être un agent émulsionnant, dispersant ou mouillant de type ionique ou non ionique ou un mélange de tels agents tensioactifs. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés, des esters d'acides gras et de polyols, les dérivés à fonction sulfates, sulfonates et phosphates des composés précédents. La présence d'au moins un agent tensioactif est généralement indispensable lorsque la matière active et/ou le support inerte ne sont pas solubles dans l'eau et que l'agent vecteur de l'application est l'eau.

Ainsi donc, les compositions à usage agricole selon l'invention peuvent contenir la matière active dans de très larges limites, allant de 0.05 % à 95 % (en poids). Leur teneur en agent tensio-actif est avantageusement comprise entre 5 % et 40 % en poids. Sauf indication contraire les pourcentages donnés dans cette description, incluant les revendications, sont en poids.

Ces compositions selon l'invention sont elles-mêmes sous des formes assez diverses, solides ou liquides.

Comme formes de compositions solides, on peut citer les poudres pour poudrage (à teneur en matière active pouvant aller jusqu'à 100 %) et les granulés, notamment ceux obtenus par extrusion, par compactage, par imprégnation d'un support granulé, par granulation à partir d'une poudre (la teneur en matière active dans ces granulés étant entre 0,5 et 80 % pour ces derniers cas), les comprimés ou tablettes effervescents.

La composition fongicide et/ou bactéricide selon l'invention peut encore être utilisée sous forme de poudres pour poudrage ; on peut aussi utiliser une composition comprenant 50 g de matière active et 950 g de talc ; on peut aussi utiliser une composition comprenant 20 g de matière active, 10 g de silice finement divisée et 970 g de talc ; on mélange et broie ces constituants et on applique le mélange par poudrage.

Comme formes de compositions liquides ou destinées à constituer des compositions liquides lors de l'application, on peut citer les solutions, en particulier les concentrés solubles dans l'eau, les émulsions, les suspensions concentrées, les aérosols, les poudres mouillables (ou poudre à pulvériser), les pâtes, les gels.

Les suspensions concentrées, applicables en pulvérisation, sont préparées de manière à obtenir un produit fluide stable ne se déposant pas et elles contiennent habituellement de 10 à 75 % de matière active, de 0,5 à 15 % d'agents tensioactifs, de 0,1 à 10 % d'agents thixotropes, de 0 à 10 % d'additifs appropriés, comme des anti-mousses, des inhibiteurs de corrosion, des stabilisants, des agents de pénétration et des adhésifs et, comme support, de l'eau ou un liquide organique dans lequel la matière active est peu ou pas soluble : certaines matières solides organiques ou des sels minéraux peuvent être dissous dans le support pour aider à empêcher la sédimentation ou comme antigels pour l'eau.

A titre d'exemple, voici une composition de suspension concentrée :

### Exemple SC 1 :

- matière active 500 g
- phosphate de tristyrylphénol polyéthoxylé 50 g
- alkylphénol polyéthoxylé 50 g
- polycarboxylate de sodium 20 g
- éthylène glycol 50 g
- huile organopolysiloxanique (antimousse) 1 g
- polysaccharide 1,5 g
- eau 316,5 g

Les poudres mouillables (ou poudre à pulvériser) sont habituellement préparées de manière qu'elles contiennent 20 à 95 % de matière active, et elles contiennent habituellement, en plus du support solide, de 0 à 30 % d'un agent mouillant, de 3 à 20 % d'un agent dispersant, et, quand c'est nécessaire, de 0.1 à 10 % d'un ou plusieurs stabilisants et/ou autres additifs, comme des agents de pénétration, des adhésifs, ou des agents antimottants. colorants, etc...

Pour obtenir les poudres à pulvériser ou poudres mouillables, on mélange intimement les matières actives dans les mélangeurs appropriés avec les substances additionnelles et on broie avec des moulins ou autres broyeurs appropriés. On obtient par là des poudres à pulvériser dont la mouillabilité et la mise en suspension sont avantageuses ; on peut les mettre en suspension avec de l'eau à toute concentration désirée et ces suspensions sont utilisables trés avantageusement en particulier pour l'application sur les feuilles des végétaux.

A la place des poudres mouillables, on peut réaliser des pâtes. Les conditions et modalités de réalisation et d'utilisation de ces pâtes sont semblables à celles des poudres mouillables ou poudres à pulvériser.

A titre d'exemple, voici diverses compositions de poudres mouillables (ou poudres à pulvériser):

### Exemple PM 1

- matière active 50%
- alcool gras éthoxylé (agent mouillant) 2,5%
- phényléthylphénol éthoxylé (agent dispersant) 5%
- craie (support inerte) 42.5%

### Exemple PM 2 :

- matière active 10%
- alcool synthétique oxo de type ramifié, en C13 éthoxylé par 8 à 10 oxyde d'éthylène (agent mouillant) 0,75%
- lignosulfonate de calcium neutre (agent dispersant) 12%
- carbonate de calcium (charge inerte) q.s.p. 100 %

### Exemple PM 3 :

Cette poudre mouillable contient les mêmes ingrédients que dans l'exemple précédent. dans les proportions ci-après :
- matière active 75%
- agent mouillant 1,50%
- agent dispersant 8%
- carbonate de calcium (charge inerte) q.s.p.100%

### Exemple PM 4 :

- matière active 90%
- alcool gras éthoxylé (agent mouillant) 4%
- phényléthylphénol éthoxylé (agent dispersant) 6%

### Exemple PM 5 :

- matière active 50%
- mélange de tensio-actifs anioniques et non ioniques (agent mouillant) 2,5%
- lignosulfonate de sodium (agent dispersant) 5%
- argile kaolinique (support inerte) 42,5%

Les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistance épaisse comme celle d'une "mayonnaise".

Les compositions fongicides selon l'invention peuvent être formulées sous la forme de granulés dispersibles dans l'eau également compris dans le cadre de l'invention.

Ces granulés dispersibles, de densité apparente généralement comprise entre environ 0,3 et 0,6 ont une dimension de particules généralement comprise entre environ 150 et 2000 et de préférence entre 300 et 1500 microns.

La teneur en matière active de ces granulés est généralement comprise entre environ 1 % et 90 %, et de préférence entre 25 % et 90 %.

Le reste du granulé est essentiellement composé d'une charge solide et éventuellement d'adjuvants tensio-actifs conférant au granulé des propriétés de dispersibilité dans l'eau. Ces granulés peuvent être essentiellement de deux types distincts selon que la charge retenue est soluble ou non dans l'eau. Lorsque la charge est hydrosoluble, elle peut être minérale ou, de préférence, organique. On a obtenu d'excellents résultats avec l'urée. Dans le cas d'une charge insoluble, celle-ci est de préférence minérale, comme par exemple le kaolin ou la bentonite. Elle est alors avantageusement accompagnée d'agents tensio-actifs (à raison de 2 à 20 % en poids du granulé) dont plus de la moitié est, par exemple, constituée par au moins un agent dispersant, essentiellement anionique, tel qu'un polynaphtalène sulfonate alcalin ou alcalino terreux ou un lignosulfonate alcalin ou alcalino-terreux, le reste étant constitué par des mouillants non ioniques ou anioniques tel qu'un alcoyl naphtalène sulfonate alcalin ou alcalino-terreux.

Par ailleurs, bien que cela ne soit pas indispensable, on peut ajouter d'autres adjuvants tels que des agents anti-mousse.

Le granulé selon l'invention peut être préparé par mélange des ingrédients nécessaires puis granulation selon plusieurs techniques en soi connues (drageoir, lit fluide, atomiseur, extrusion, etc...). On termine généralement par un concassage suivi d'un tamisage à la dimension de particule choisie dans les limites mentionnées ci-dessus. On peut encore utiliser des granulés obtenus comme précédemment puis imprégnés avec une composition contenant la matière active.

De préférence, il est obtenu par extrusion, en opérant comme indiqué dans les exemples ci-après.

### Exemple GD1 : Granulés dispersibles

Dans un mélangeur, on mélange 90 % en poids de matière active et 10 % d'urée en perles. Le mélange est ensuite broyé dans un broyeur à broches. On obtient une poudre que l'on humidifie avec environ 8 % en poids d'eau. La poudre humide est extrudée dans une extrudeuse à rouleau perforé. On obtient un granulé qui est séché, puis concassé et tamisé, de façon à ne garder respectivement que les granulés d'une dimension comprise entre 150 et 2000 microns.

### Exemple GD2 : Granulés dispersibles

Dans un mélangeur, on mélange les constituants suivants :
- matière active 75%
- agent mouillant (alkylnaphtalène sulfonate de sodium) 2%
- agent dispersant (polynaphtalène sulfonate de sodium) 8%
- charge inerte insoluble dans l'eau (kaolin) 15%

Ce mélange est granulé en lit fluide, en présence d'eau, puis séché, concassé et tamisé de manière à obtenir des granulés de dimension comprise entre 0,15 et 0,80 mm.

Ces granulés peuvent être utilisés seuls, en solution ou dispersion dans de l'eau de manière à obtenir la dose cherchée. Ils peuvent aussi être utilisés pour préparer des associations avec d'autres matières actives, notamment fongicides, ces dernières étant sous la forme de poudres mouillables, ou de granulés ou suspensions aqueuses.

En ce qui concerne les compositions adaptées au stockage et au transport, elles contiennent plus avantageusement de 0,5 à 95 % (en poids) de matière active.

L'invention a pour autre objet un procédé de lutte, à titre curatif ou préventif, contre les champignons phytopathogènes des cultures et/ou bactéries caractérisé en ce que l'on applique sur les parties aériennes des végétaux une quantité efficace et non phytotoxique d'une combinaison du composé A et au moins un composé B, par exemple dans une composition fongicide et/ou bactéricide selon l'invention.

Les champignons phytopathogènes des cultures qui peuvent être combattus par ce procédé sont notamment ceux :
- du groupe des oomycètes :
   - du genre *Phytophthora* tel que *Phytophthora phaseoli*, *Phytophthora citrophthora, Phytophthora capsici, Phytophthora cactorum. Phytophthora palmivora, Phytophthora cinnamoni, Phytophthora megasperma, Phytophthora parasitica, Phytophthora fragariae, Phytophthora cryptogea, Phytophthora porri, Phytophthora nicotianae, Phytophthora infestans* (mildiou des solanées, notamment de la pomme de terre ou de la tomate);
   - de la famille des Péronosporacées, notamment *Plasmopara viticola* (mildiou de la vigne), *Plasmopara halstedei* (mildiou du tournesol), *Pseudoperonospora sp* (notamment mildiou des cucurbitacees (*Pseudoperonospora cubensis*) et du houblon (*Pseudoperonospora humuli*)), *Bremia lactucae* (mildiou de la laitue), *Peronospora tabacinae* (mildiou du tabac), *Peronospora destructor* (mildiou de l'oignon), *Peronospora parasitica* (mildiou du chou), *Peronospora farinosa* (mildiou des endives et mildiou de la betterave).
- du groupe des adélomycètes :
   - du genre *Alternaria*, par exemple *Alternaria solani* (alternariose des solanées, et notamment de la tomate et des pommes de terre ),
   - du genre *Guignardia*, notamment *Guignardia bidwellii* (black rot de la vigne),
   - du genre *Venturia*, par exemple *Venturia inaequalis, Venturia pirina* (tavelures du pommier ou du poirier),
   - du genre *Taphrina*, par exemple *Taphrina deformans* (cloque du pêcher).

Les maladies d'origine bactérienne qui peuvent être combattues par ce procédé sont notamment :
- le feu bactérien, *erwinia amylovora* ;
- la tache bactérienne des arbres fruitiers à noyau, *xanthomonas campestris* ;
- la bactériose du poirier, *pseudomonas syringae*.

Les cultures envisagées dans le cadre de la présente invention sont de préférence les cultures légumières (haricot, oignon, cucurbitacées, chou, pomme de terre, tomate, poivron, épinard, pois, laitue, céleri, endives), les cultures fruitières (fraisiers, framboisiers), les culture arboricoles (pommiers, poiriers, cerisiers, ginseng, citronniers, cocotiers, pécaniers, cacaoyers, noyers, hévéas, oliviers, peupliers, bananiers), la vigne, le tournesol, la betterave, le tabac et les cultures ornementales.

Un classement fait non plus par champignons ou bactéries visés mais par cultures cibles peut être illustré comme ci-dessous :
- vigne: oïdium (*Uncinula necator*), mildiou (*Plasmopara viticola*), excoriose (*Phomopsis viticola*) et black-rot (*Guignardia bidwellii*),
- cultures légumières: mildious (*Peronospora* sp., *Bremia lactucae, Pseudoperonospora* sp),
- arboriculture: tavelure (*Venturia inaequalis, V. pirina*), maladies bactériennes (*erwinia amylovora, xanthomonas campestris, pseudomonas syringae*).
- agrumes: tavelure (*Elsinoe fawcetti*), mélanose (*Phomopsis citri*) et maladies à *Phytophthora* sp..

La composition fongicide et/ou bactéricide objet de l'invention est appliquée au moyen de différents procédés de traitement tels que :
- la pulvérisation sur les parties aériennes des cultures à traiter d'un liquide comprenant ladite composition,
- le poudrage, l'incorporation au sol de granulés ou de poudres, l'arrosage, l'injection dans les arbres ou le badigeonnage.

La pulvérisation d'un liquide sur les parties aériennes des cultures à traiter est le procédé de traitement préféré.

Par "quantité efficace et non phytotoxique", on entend une quantité de composition selon l'invention suffisante pour permettre le contrôle ou la destruction des champignons ou bactéries présents ou susceptibles d'apparaître sur les cultures, et n'entraînant pour lesdites cultures aucun symptôme notable de phytotoxicité. Une telle quantité est susceptible de varier dans de larges limites selon le champignon ou la bactérie à combattre, le type de culture, les conditions climatiques, et les composés compris dans la composition fongicide et/ou bactéricide selon l'invention. Cette quantité peut être déterminée par des essais systématiques au champ, à la portée de l'homme du métier.

Les doses d'emploi lors de la mise en oeuvre du procédé selon l'invention seront généralement alors sur vigne, cultures légumières, arboriculture, agrumes, etc:
par traitement foliaire :
   500 à 6000 g/ha de composé B, par ex. fosétyl-Al, + 25 à 500 g/ha de composé A et plus précisément 1000 à 3000 g/ha + 50 à 150 g/ha, soit une dose totale de composition selon l'invention comprise entre 525 et 6500 g/ha, de préférence entre 1050 et 3150 g/ha. De manière préférée, on utilise 1200 à 1800 g/ha de composé B et 50 à 100 g/ha de composé A soit une dose totale de composition selon l'invention comprise entre 1250 g/ha et 1900 g/ha.

En dernier lieu, l'invention concerne un produit comprenant au moins un composé A et au moins un composé B pour le contrôle des champignons phytopathogènes et/ou bactéries d'un milieu par application simultanée, séquentielle ou séparée.

L'exemple suivant est donné à titre purement illustratif de l'invention, qu'il ne limite en aucune façon.

Dans la figure jointe au présent texte, la dose de chaque matière active prise isolément, requise pour le contrôle du champignon phytopathogène au niveau indiqué, est comparée avec celle des 2 matières actives prises en mélange. La dose efficace de chaque matière active prise isolément est indiquée sur l'axe des abscisses et des ordonnées et une ligne droite est tracée coupant ces 2 axes et reliant ces 2 doses. Lorsqu'une matière active prise isolément n'est pas efficace la ligne droite est parallèle à l'axe des coordonnées qui indique les doses de cette matière active. En ce qui concerne les 2 matières actives prises en mélange, la dose du mélange à un ratio donné est indiquée par un point.

### Exemple 1 : Essai in vivo de l'association de famoxadone avec le fosétyl-Al sur Plasmopara viticola (mildiou de la vigne) par traitement préventif 5 jours avant contamination.

On utilise un granulé dispersable à 50% du composé A (famoxadone) et un granulé dispersable à 80% du composé B (fosetyl Al). On prépare à partir de ces compositions par dilution à l'eau des suspensions diluées en mélangeant ces deux liquides de manière à obtenir différents ratios des deux produits famoxadone et fosetyl. Les rapports étudiés ont été choisis entre A/B compris entre 1/10 et 1/1 soit égaux à 0,1 - 0,2 et 1.

Des boutures de vigne (Vitis vinifera), variété Chardonnay, sont cultivées dans des godets. Lorsque ces plants sont âgés de 2 mois (stade 8 à 10 feuilles, hauteur de 10 à 15 cm ), ils sont traités par pulvérisation au moyen de la suspension ci-dessus.

Des plants utilisés comme témoins sont traités par une suspension similaire mais ne contenant pas de matière active ("blanc de formulation").

Après 5 jours pendant lesquels les plants sont maintenus à 20°C et 70%HR, on contamine chaque plant par pulvérisation d'une suspension aqueuse de spores de *Plasmopara viticola* obtenue à partir de feuilles sporulées contaminées 7 jours auparavant. Ces spores sont mises en suspension à raison de 100 000 unités par cm³ d'inoculum. La contamination est réalisée par pulvérisation de l'inoculum à la surface inférieure des feuilles.

Les plants contaminés sont ensuite mis en incubation pendant sept jours à 20-22°C sous 90-100% d'humidité relative sous lumière naturelle.

La lecture se fait 7 jours après la contamination, en comparaison avec les plants témoins. Nous avons choisi de présenter dans le tableau 1 les résultats chiffrés correspondant aux DE70 et 90% (doses efficaces qui assurent 70 ou 90 % de contrôle de la maladie) pour les différents ratios des mélanges étudiés, calculées sur la base de 3 répétitions par facteurs.

**Tableau 1 :**

| application préventive 5 jours sur mildiou de la vigne Le fosetyl (C) est inactif seul à toutes les doses étudiées (DE90>2000 mg/l) | | |
|---|---|---|
| | **DE70** | **DE90** |
| A=famoxadone | **2** | **5,5** |
| B=fosetyl Al | **>2000** | **>2000** |
| A/(B)= 1/10 | **1,5** | **3,6** |
| A/(B)= 1/5 | **1,5** | **3,1** |
| A/(B)= 1/1 | **2** | **6,3** |

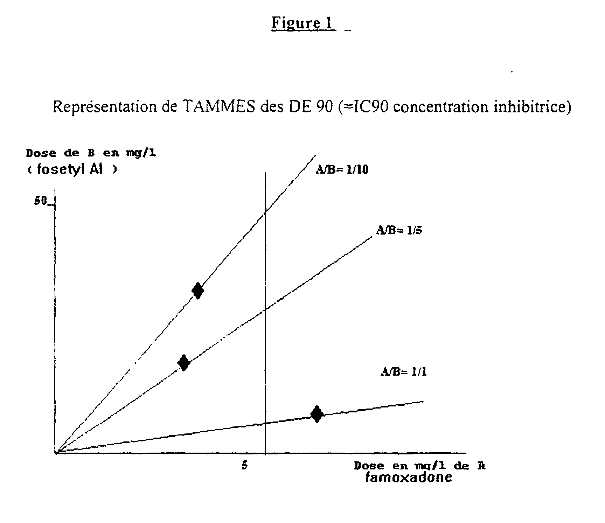

L'illustration sous forme d'une représentation de TAMMES n'est donné que pour les DE90. Les résultats obtenus sont reportés sous forme de points, correspondant à 90% de destruction du parasite et placés dans un diagramme d'isobole de Tammes qui comporte en abcisse les doses de A exprimées en ppm (mg/l) et en ordonnée les doses de B également en ppm (mg/l)(cf. Figure 1/1).

On obtient le diagramme de la figure 1. Il apparait de façon claire que lorsque le fosetyl est ajouté à la famoxadone dans le rapport 1/10 et 1/5 la dose de famoxadone nécessaire au contrôle du mildiou lors d'un traitement préventif 5 jours est abaissé en dessous de 5,5 mg/l qui correspond à la dose seule de famoxadone qu'il est nécessaire d'appliquer pour obtenir un pourcentage de contrôle de 90% de la maladie.

La disposition des points obtenus indique un effet unilatéral qualifié en langue anglaise, selon la méthode de TAMMES de "one sided effect". Cette disposition correspond à une isobole de type II selon ladite méthode ( TAMMES P.M.L.(1964) Isoboles, a graphic representation of synergism in pesticides; *Netherlands Journal of Plant Pathology* **70**, 73-80 ) La disposition des points correspondant aux ratios A/(B) égaux à 1/10 et 1/5 signifie que les produits sont potentiellement en situation de synergie. Dans le cas du rapport 1/1 il y a additivité du mélange binaire par rapport aux produits seuls.

Lorsque la famoxadone est à une dose inférieure d'un facteur 5 où 10 dans le mélange à celle du fosetyl Al, les deux produits sont assurément compatibles (additivité) et en situation de synergie potentielle.

## Revendications

1. Composition fongicide et/ou bactéricide synergique comprenant comme composé A la famoxadone et au moins un composé fongicide B choisi dans le groupe comprenant les dérivés de l'acide phosphoreux comme les phosphites métalliques tel que le fosétyl-Al, et l'acide phosphoreux lui-même et ses sels alcalins ou alcalino-terreux;
ladite composition comprenant les composants A et B dans un rapport en poids A/B compris entre 1/240 et 1/1, de préférence entre 1/60 et 1/7.

2. Composition fongicide et/ou bactéricide selon la revendication 1 **caractérisée en ce que** le composé B est le fosétyl Al.

3. Composition fongicide et/ou bactéricide selon l'une des revendications 1 ou 2, **caractérisée en ce que** le rapport A/B est compris entre 1/60 et 1/7, et de façon encore plus avantageuse ce rapport est compris entre 1/36 et 1/12 pour l'ensemble des cultures envisagées.

4. Composition fongicide et/ou bactéricide selon l'une quelconque des revendications 1 à 3, **caractérisée en ce qu'** elle comprend les composés A et B en mélange avec les supports solides ou liquides acceptables en agriculture et/ou les agents tensio-actifs également acceptables en agriculture.

5. Composition fongicide et/ou bactéricide selon l'une quelconque des revendications 1 à 4, **caractérisée en ce qu'** elle comprend de 0,05 à 95 % (en poids) de matière active.

6. Procédé de contrôle des champignons phytopathogènes ou bactéries d'un milieu **caractérisé en ce que** l'on applique au dit milieu un composé A et au moins un composé B, ces composés étant tels que définis à la revendication 1, et la combinaison de ces composés étant dans une quantité totale efficace et non phytotoxique

7. Procédé de lutte, à titre curatif ou préventif, contre les champignons phytopathogènes des cultures et/ou contre les bactéries, **caractérisé en ce que** l'on applique sur les parties aériennes des végétaux une quantité efficace et non phytotoxique d'une composition fonticide et/ou bactéricide selon l'une quelconque des revendications 1 à 5.

8. Procédé de lutte selon la revendication 7 **caractérisé en ce que** l'on pulvérise un liquide comprenant la composition fongicide et/ou bactéricide selon l'une quelconque des revendications 1 à 5 sur les parties aériennes des cultures à traiter

9. Procédé de lutte contre les champignons phytopathogènes des cultures et/ou contre les bactéries selon la revendication 8, **caractérisé en ce que** l'on applique par traitement foliaire une dose totale de composition comprise entre 525 et 6500 g/ha, de préférence entre 1050 et 3150 g/ha.

10. Procédé de lutte selon la revendication 9 **caractérisé en ce que** l'on applique une dose totale de composition comprise entre 1250 et 1900 g/ha.

## Claims

1. Synergistic fungicidal and/or bactericidal composition comprising, as compound A, famoxadone and at least one fungicidal compound B selected from the group comprising the phosphorous acid derivatives, such as metal phosphites, such as fosetyl-aluminium, and phosphorous acid itself and its alkali metal or alkaline earth metal salts;
said composition comprising the components A and B in a weight ratio A/B of between 1/240 and 1/1, preferably between 1/60 and 1/7.

2. Fungicidal and/or bactericidal composition according to claim 1, **characterized in that** compound B is fosetyl-aluminium.

3. Fungicidal and/or bactericidal composition according to either of claims 1 and 2, **characterized in that** the ratio A/B is between 1/60 and 1/7, this ratio especially advantageously being between 1/36 and 1/12 for all of the crops under consideration.

4. Fungicidal and/or bactericidal composition according to any one of claims 1 to 3, **characterized in that** it comprises the compounds A and B as a mixture with solid or liquid agriculturally acceptable carriers and/or surfactants which are also agriculturally acceptable.

5. Fungicidal and/or bactericidal composition according to any one of claims 1 to 4, **characterized in that** it comprises from 0.05 to 95% (by weight) of active material.

6. Method for the control of phytopathogenic fungi or bacteria in an environment, **characterized in that** a compound A and at least one compound B are applied to said environment, these compounds being as defined in claim 1, and the combination of these compounds being in an overall quantity which is effective and non-phytotoxic.

7. Method for the curative or preventative control of crop-phytopathogenic fungi and/or bacteria, **characterized in that** an effective, non-phytotoxic quantity of a fungicidal and/or bactericidal composition according to any one of claims 1 to 5 is applied to the aerial parts of the plants.

8. Control method according to claim 7, **characterized in that** the aerial parts of the crops to be treated are sprayed with a liquid comprising the fungicidal and/or bactericidal composition according to any one of claims 1 to 5.

9. Method for the control of crop-phytopathogenic fungi and/or bacteria according to claim 8, **characterized in that** a total dose of composition of between 525 and 6500 g/ha, preferably between 1050 and 3150 g/ha, is applied for foliar treatment.

10. Control method according to claim 9, **characterized in that** a total dose of composition of between 1250 and 1900 g/ha is applied.

## Patentansprüche

1. Synergistische fungicide und/oder bactericide Zusammensetzung, die als Verbindung A Famoxadon und mindestens eine fungicide Verbindung B, ausgewählt unter Phosphorsäure-Derivaten, beispielsweise Metallphosphiten, wie Fosethyl-Aluminium, und Phosphorsäure selber und deren Alkalimetall- oder Erdalkalimetallsalzen, ausgewählt ist, wobei die Zusammensetzung die Komponenten A und B in einem Gewichtsverhältnis A/B zwischen 1/240 und 1/1, vorzugsweise zwischen 1/60 und 1/7, enthält.

2. Fungicide und/oder bactericide Zusammensetzung nach Anspruch 1, **dadurch gekennzeichnet, daß** die Verbindung B Fosetyl-Aluminium ist.

3. Fungicide und/oder bactericide Zusammensetzung nach den Ansprüchen 1 und 2, **dadurch gekennzeichnet, daß** das Verhältnis A/B zwischen 1/60 und 1/7 liegt, wobei dieses Verhältnis in bezug auf sämtliche in Frage kommenden Kulturpflanzen besonders vorteilhaft zwischen 1/36 und 1/12 liegt.

4. Fungicide und/oder bactericide Zusammensetzung nach einem der Ansprüche 1 bis 3, **dadurch gekennzeichnet, daß** sie die Verbindungen A und B in Form eines Gemisches mit festen oder flüssigen landwirtschaftlich akzeptablen Trägern und/oder grenzflächenaktiven Stoffen, die ebenfalls landwirtschaftlich akzeptabel sind, enthält.

5. Fungicide und/oder bactericide Zusammensetzung nach einem der Ansprüche 1 bis 4, **dadurch gekennzeichnet, daß** sie 0,05 bis 95 % (bezogen auf das Gewicht) Wirkstoff enthält.

6. Verfahren zur Bekämpfung von phytopathogenen Pilzen oder Bakterien in einer Umgebung, **dadurch gekennzeichnet, daß** eine Verbindung A und mindestens eine Verbindung B in diese Umgebung ausgebracht werden, wobei diese Verbindungen wie in Anspruch 1 definiert sind und die Kombination dieser Verbindungen in einer solchen Gesamtmenge vorliegt, daß sie wirksam ist, aber nicht phytotoxisch.

7. Verfahren zur Heilung von oder zur präventiven Bekämpfung von für Kulturpflanzen phytopathogenen Pilzen und/oder Bakterien, **dadurch gekennzeichnet, daß** eine wirksame, nicht phytotoxische Menge einer fungiciden und/oder bactericiden Zusammensetzung nach einem der Ansprüche 1 bis 5 auf die sich in der Luft befindlichen Teile der Pflanzen ausgebracht wird.

8. Bekämpfungsverfahren nach Anspruch 7, **dadurch gekennzeichnet, daß** die zu behandelnden, sich in der Luft befindlichen Teile der Kulturpflanzen mit einer Flüssigkeit besprüht werden, welche die fungizide und/oder bactericide Zusammensetzung nach einem der Ansprüche 1 bis 5 enthält.

9. Verfahren zur Bekämpfung von für Kulturpflanzen phytopathogenen Pilzen und/oder Bakterien nach Anspruch 8, **dadurch gekennzeichnet, daß** eine Gesamtdosis der Zusammensetzung von zwischen 525 und 6500 g/ha, vorzugsweise zwischen 1050 und 3150 g/ha, zur Blätterbehandlung ausgebracht wird.

10. Bekämpfungsverfahren nach Anspruch 9, **dadurch gekennzeichnet, daß** eine Gesamtdosis an Zusammensetzung zwischen 1250 und 1900 g/ha ausgebracht wird.
